# DEMANDE DE BREVET EUROPEEN

(11) **EP 0 748 127 A1**
(43) Date de publication de la demande: **11.12.1996**
(21) Numéro de dépôt: 96401189.4
(22) Date de dépôt: 04.06.1996
(51) Int. Cl.: H04N 7/68, H04N 7/50

(54) **Procédé et dispositif de masquage d'erreur lors du décodage d'un flux de données**

(30) Priorité: 09.06.1995 FR 9506866
(71) Demandeur: SGS-THOMSON MICROELECTRONICS S.A., 94253 Gentilly Cédex (FR)
(72) Inventeur: Bramley, Richard, 38000 Grenoble (FR)
(74) Mandataire: Michelet, Alain

(57) **Abrégé**

L'invention concerne un procédé et un dispositif de masquage d'erreur lors du décodage d'un flux de données représentant des images animées codées selon la norme MPEG dans lequel des informations produites par un décodeur à longueur variable (1) sont regroupées en fonction des informations fournies par des vecteurs mouvement pour former des macroblocs associés pour former des tranches elles-mêmes associées pour former des images.

Les vecteurs mouvement concernant chaque image (n) sont conservées dans une mémoire pendant le regroupement des macroblocs de l'image (n+1) suivante et, lorsqu'une erreur est détectée dans les informations produites ce macrobloc est éliminé et remplacé par un macrobloc ayant les mêmes valeurs que le macrobloc correspondant de l'image (n) précédente.

## Description

L'invention concerne un procédé et un dispositif de masquage d'erreur lors du décodage d'un flux de données représentant des images animées codées selon la norme MPEG.

La norme MPEG définit les conditions de codage et de décodage d'images animées.

Les techniques de transmission et le stockage d'images numérisées permettent d'améliorer de manière significative la qualité des images finalement obtenues par rapport à la transmission analogique. Il est ainsi possible de multiplier également les applications de ces techniques.

Toutefois, la transmission directe et le stockage d'images numérisées animées nécessite un flux d'informations extrêmement élevé, ce qui rend nécessaire, en pratique, la compression et le codage de ces images.

Ainsi, les images numérisées sont codées avant transmission, de manière à diminuer la quantité d'informations les représentant, puis décodées après transmission.

Les techniques de codage et décodage sont bien entendu essentielles pour la qualité des images finalement obtenues et il est apparu nécessaire, pour assurer la compatibilité des différents matériels mettant en oeuvre ces techniques, d'en assurer une normalisation.

C'est ainsi qu'un groupe d'Experts (Moving Picture Expert Group - MPEG) a mis au point la norme ISO 11172.

Cette norme souvent désignée par le sigle MPEG définit des conditions de codage et de décodage d'images animées, éventuellement associées à un signal sonore, pouvant être utilisées aussi bien pour la mise en mémoire et la restitution d'images que pour leur transmission.

Cette norme MPEG peut donc être utilisée pour le stockage d'images sur des compact discs, compact discs interactifs, sur des bandes magnétiques, être utilisée pour la transmission d'images au travers de réseaux locaux, de lignes téléphoniques comme pour la transmission d'images télévision par voie hertzienne.

La norme définissant de manière complète et détaillée l'ensemble de cette technique est accessible auprès des organismes de normalisation et il convient de s'y référer pour accéder à sa description détaillée. La compression de données mise en oeuvre selon la norme MPEG peut suivre plusieurs traitements.

Les images consécutives sont tout d'abord collectées, de manière à former un groupe d'images formant une séquence. Une séquence est donc subdivisée en groupes d'images.

Chaque image est divisée en tranches, chaque tranche étant elle-même décomposée en macroblocs qui constituent l'élément de base utilisé pour appliquer une compensation de mouvements et pour changer, éventuellement, l'échelle de quantification.

Les macroblocs sont formés d'une matrice 16 x 16 d'éléments d'image (pixels).

Chaque macrobloc est divisé en six blocs, les quatre premiers portant une information de luminance et les deux autres portant chacun une information de chrominance.

Chacun de ces six blocs est défini comme étant une matrice de 8 x 8 éléments d'images (pixels).

A l'intérieur de chaque séquence, différents types d'images sont définis, de manière à réduire la quantité d'informations à stocker ou à transmettre en raison des analogies existantes entre les informations contenues dans les différentes images d'une même séquence.

Les images I (Intra frames) sont des images codées sans référence à une autre image.

Les images P (Predicted) sont déduites à partir de l'image I ou P précédemment reconstruite.

Les images B (Bi-directional frames) sont déduites de deux images I et P ou P et P reconstruites, l'une juste avant et l'autre juste après.

Il faut souligner ici que, généralement, l'ordre de transmission des images d'une séquence ne correspond pas à leur ordre de présentation lors de l'acquisition ou de la restitution. Elles sont dans l'ordre de décodage.

La transformation discrète en cosinus (Discrete Cosine Transformation - DCT) est appliquée au niveau des blocs.

Cette transformation DCT transforme des blocs spatiaux, définis comme nous l'avons indiqué plus haut en une matrice 8 x 8 de pixels, en des blocs temporels formés d'une matrice également 8 x 8, de fréquences spatiales.

On a montré que dans la matrice 8 x 8 du bloc temporel, le coefficient de fonds continu (DC) placé en haut à gauche dans la matrice est beaucoup plus important, pour l'impression visuelle obtenue, que les autres composants correspondant à différentes fréquences.

Plus précisément, plus la fréquence est élevée, moins l'oeil y est sensible.

C'est la raison pour laquelle on quantifie les niveaux des fréquences, d'autant plus que les fréquences sont élevées. Cette quantification est assurée par un algorithme qui n'est pas imposé par la norme, qui peut être une opération de quantification et de codage à longueur variable (Variable Length Coding - VLC).

La matrice dans le domaine fréquentiel obtenue par la transformation DCT est ensuite traitée par une matrice dite "matrice de quantification" qui est utilisée pour diviser chacun des termes de la matrice du domaine temporel par une valeur dépendant de sa position et prenant en compte le fait que le poids des différentes fréquences représentées par ces coefficients est variable.

Le résultat de cette opération conduit, après que chacune des valeurs ait été arrondie à la valeur entière la plus proche, à un nombre important de coefficients égal à zéro.

Il faut souligner que, pour les macroblocs intra, la valeur de quantification du coefficient de fond (DC) est constante, par exemple égale à 8. Les coefficients de fréquence non nuls sont alors codés selon un balayage en zigzag, par référence à une table de Huffman, donnant à chacun des coefficients de la matrice une valeur codée de longueur variable, et réduisant le volume d'information.

De préférence, les coefficients représentant le fonds continu sont transmis après quantification et, par ailleurs, la matrice de quantification est optimisée, de manière à ce que le volume d'informations soit inférieur à un niveau prédéterminé correspondant aux possibilités de stockage ou de transmission, sans que cela porte atteinte de manière excessive à la qualité de l'information transmise.

Les images de type I sont codées sans l'utilisation de vecteur de mouvement.

Au contraire, les images de type P et B utilisent, au moins pour certains des macroblocs qui les composent, des vecteurs de mouvement permettant d'augmenter l'efficacité du codage et indiquant de quelle partie de la ou des images de référence, un macrobloc particulier de l'image considérée doit être déduit.

La recherche du vecteur de mouvement fait l'objet d'une optimisation lors du codage et il est lui-même codé en utilisant la technique DPCM qui exploite au mieux la corrélation existante entre les vecteurs de mouvement des différents macroblocs d'une même image. Ils font finalement l'objet d'un codage à longueur variable (VLC).

Toutes les informations concernant une séquence codée forment le flux d'informations numériques (bitstream) qui est soit enregistré, soit transmis.

Un tel flux d'informations numériques commence par un en-tête de séquence contenant un certain nombre d'informations et de paramètres dont les valeurs sont maintenues pour l'ensemble de la séquence.

De même, la séquence étant décomposée en groupes d'images, chacun de ces groupes est précédé par un en-tête de groupe et les données représentant chaque image sont elles-mêmes précédées d'un en-tête d'image.

Le flux d'informations numériques ou de données ici transmises est susceptible, pour différentes raisons, de contenir des informations déformées. Il peut même arriver que des informations émises soient perdues pendant la retransmission et manquent donc à la réception.

Dans un tel cas, le décodeur à longueur variable détecte ces défauts des informations qu'il a reçus et donc des codes décodés qu'il est à même de transmettre. Ces défauts conduisent à la production d'images de mauvaise qualité.

L'invention propose un procédé et un dispositif de masquage permettant d'améliorer la qualité des images produites malgré ces défauts.

A cet effet, l'invention concerne un procédé de masquage d'erreur lors du décodage d'un flux de données représentant des images animées codées selon la norme MPEG, dans lequel des informations produites par un décodeur à longueur variable sont regroupées en fonction des informations fournies par des vecteurs mouvement pour former des macroblocs associés pour former des tranches elles-mêmes associées pour former des images.

Selon l'invention, les vecteurs mouvement concernant chaque tranche de l'image (n) sont conservées dans une mémoire de type premier entré/premier sorti (FIFO) pendant le regroupement des macroblocs de la tranche de l'image (n+1) suivante. Lorsqu'une erreur est détectée dans les informations produites par le décodeur à longueur variable lors de la formation d'un macrobloc de l'image (n+1) suivante, ce macrobloc est éliminé et remplacé par un macrobloc ayant les mêmes valeurs que le macrobloc correspondant de la tranche de l'image (n) précédente.

Dans un mode de réalisation préféré, une erreur détectée lors de la formation d'un macrobloc entraîne le remplacement de l'ensemble de la tranche de l'image (n+1) suivante à laquelle appartient ce macrobloc par la tranche correspondante de la tranche de l'image (n) précédente.

L'invention concerne également un dispositif de décodage d'un flux de données représentant des images animées codées selon la norme MPEG, destiné à recevoir une succession d'informations produites par un décodeur à longueur variable et à les regrouper pour former des macroblocs associés pour former des tranches elles-mêmes associées pour former des images assurant le masquage des erreurs.

Selon l'invention, ce dispositif comporte une mémoire de masquage de type premier entré/premier sorti (FIFO) destinée à contenir les vecteurs mouvement concernant une tranche de l'image (n) complète, une mémoire de macrobloc destinée à contenir les informations représentant le macrobloc en cours de formation, un multiplexeur dont les entrées sont reliées respectivement à la mémoire de masquage et à la mémoire de macrobloc et dont la commande est reliée à une sortie d'erreur du décodeur à longueur variable. Le multiplexeur adresse, à un élément aval, les valeurs représentatives du macrobloc lorsqu'aucun signal d'erreur n'a été émis par le décodeur à longueur variable pendant sa formation, et les valeurs représentatives du macrobloc correspondant de la tranche de l'image (n) lorsqu'un signal d'erreur a été émis pendant sa formation.

Dans un mode de réalisation préféré, ce dispositif comporte une mémoire de tranche incluant la mémoire de macrobloc, et l'ensemble des valeurs représentatives de la tranche en cours de formation est remplacé par l'ensemble des valeurs de la tranche correspondante de l'image(n)lorsqu'un signal d'erreur a été émis pendant sa formation.

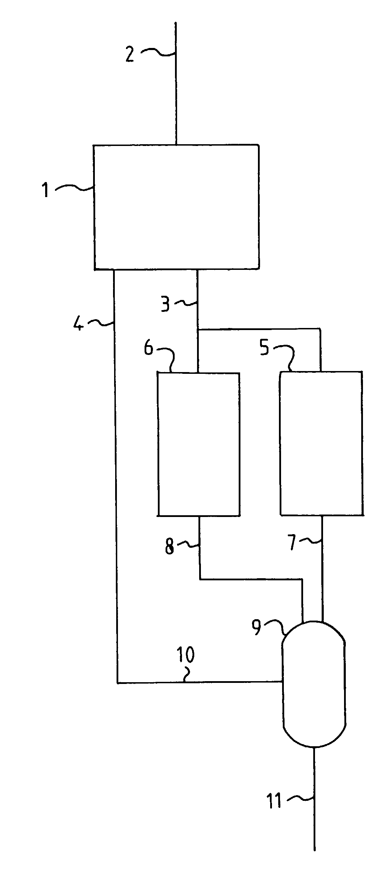

L'invention sera décrite plus en détail en référence à la Figure unique annexée.

Un décodeur à longueur variable 1 reçoit un flux d'informations 2 codées selon la norme MPEG. Il fournit, sur sa sortie 3, une succession de codes décodés et, sur sa sortie d'erreur 4, un signal d'erreur lorsque l'un des codes n'a pas pu être convenablement reconnu et décodé.

La sortie de données 3 est reliée, d'une part, à une mémoire de macrobloc 5 et, d'autre part, à une mémoire de masquage 6. Ces mémoires sont chacune par leurs sorties 7, 8 connectées à un multiplexeur 9 dont la commande 10 est reliée à la sortie d'erreur 4 du décodeur à longueur variable.

Le multiplexeur 9 fournit un flux de codes sortants 11 destinés à un dispositif aval.

A un instant donné, les codes fournis par le décodeur à longueur variable sont stockés dans la mémoire de macrobloc 5 en vue de la formation d'une image appelée image suivante (n+1).

A cet instant, la mémoire de masquage 6 contient l'ensemble des informations représentant l'image(n) précédente.

Lorsque les données 2 reçues par le décodeur à longueur variable 1 n'ont pas subi de déformation significative au cours de leur élaboration et/ou de leur transmission, celles-ci sont convenablement reconnues par le décodeur, concourent à la formation du macrobloc et lorsque toutes les informations qu'il représente sont réunies dans la mémoire de macrobloc 5. Lorsque l'ensemble des informations représentatives du macrobloc sont réunies dans cette mémoire 5, le macrobloc est adressé vers le multiplexeur et par là, en l'absence de signal d'erreur sur sa commande 10, vers le flux de données de sortie 11.

Au contraire, si le flux de données d'entrée 2 a subi une altération rendant la reconnaissance de l'un des codes impossible par le décodeur à longueur variable 1, celui-ci émet un code d'erreur par sa sortie 4 en direction de la commande 10 du multiplexeur 9. Les informations déjà mises en mémoire dans la mémoire de macrobloc 5 sont alors effacées et les informations correspondantes contenues dans la mémoire de masquage sont adressées par la sortie 8 vers le multiplexeur 9 et, en raison de la présence du signal d'erreur sur la commande 10, sont adressées vers le flux de données de sortie 11.

Les images successives n, (n+1) sont représentées par une succession de codes ayant un ordre et une fonction analogue. On appelle macrobloc analogue dans une tranche de l'image (n), un macrobloc précisément défini de la tranche de l'image (n+1), un macrobloc qui a la même fonction et se trouve au même endroit dans la définition de la tranche de l'image (n) que celui considéré dans la tranche de l'image (n+1).

L'image précédente(n) définie comme telle par rapport à l'image suivante (n+1) est une image dont les informations ont été transmises dans le flux de données d'entrée 2 avant celle de l'image suivante (n+1). Cela est indépendant des positions relatives des images lors de la reconstitution de la séquence animée résultant finalement du décodage.

Dans un mode de réalisation alternatif, la mémoire de macrobloc 5 est remplacée par une mémoire de tranche de capacité plus importante. L'ensemble des valeurs représentatives de la tranche sont maintenues dans la mémoire 5 et ne sont adressées vers le multiplexeur 9 que lorsque toutes les informations représentatives d'une tranche sont réunies.

Dans ce mode de réalisation, lorsqu'un signal d'erreur est émis par le décodeur à longueur variable sur sa sortie 4 en direction de la commande 10 du multiplexeur 9 au cours de la réunion des valeurs représentatives d'une tranche, l'ensemble de cette tranche est remplacé par la tranche correspondante de l'image précédente(n) contenue dans la mémoire de masquage 6.

Les signes de référence insérés après les caractéristiques techniques mentionnées dans les revendications, ont pour seul but de faciliter la compréhension de ces dernières, et n'en limitent aucunement la portée.

## Revendications

1. Procédé de masquage d'erreur lors du décodage d'un flux de données représentant des images animées codées selon la norme MPEG dans lequel des informations produites par un décodeur à longueur variable (1) sont regroupées en fonction des informations fournies par des vecteurs mouvement pour former des macroblocs associés pour former des tranches elles-mêmes associées pour former des images,
caractérisé en ce que les vecteurs mouvement concernant chaque image (n) sont conservées dans une mémoire de type premier entré/premier sorti (FIFO) pendant le regroupement des macroblocs de l'image (n+1) suivante et que, lorsqu'une erreur est détectée dans les informations produites par le décodeur à longueur variable (1) lors de la formation d'un macrobloc de l'image (n+1) suivante, ce macrobloc est éliminé et remplacé par un macrobloc ayant les mêmes valeurs que le macrobloc correspondant de l'image (n) précédente.

2. Procédé selon la revendication 1, caractérisé en ce que, lorsqu'un macrobloc de l'image (n+1) suivante est remplacé par un macrobloc ayant les mêmes valeurs que le macrobloc correspondant de l'image (n) précédente, toute la tranche de l'image (n+1) suivante à laquelle appartient ce macrobloc est remplacée par la tranche correspondante de l'image (n) précédente.

3. Dispositif de décodage d'un flux de données représentant des images animées codées selon la norme MPEG destiné à recevoir une succession d'informations produites par un décodeur à longueur variable (1) et à les regrouper pour former des macroblocs associés pour former des tranches elles-mêmes associées pour former des images assurant le masquage des erreurs,
caractérisé en ce qu'il comporte une mémoire de masquage (6) de type premier entré/premier sorti (FIFO) destinée à contenir les vecteurs mouvement concernant une image (n) complète, une mémoire de macrobloc (5) destinée à contenir les informations représentant le macrobloc en cours de formation, un multiplexeur (9) dont les entrées sont reliées respectivement à la mémoire de masquage (6) et à la mémoire de macrobloc (5) et dont la commande est reliée à une sortie d'erreur du décodeur à longueur variable (1) , le multiplexeur (9) adressant, à un élément aval, les valeurs représentatives du macrobloc lorsqu'aucun signal d'erreur n'a été émis par le décodeur à longueur variable (1) pendant sa formation, et les valeurs représentatives du macrobloc correspondant de l'image (n) lorsqu'un signal d'erreur a été émis pendant sa formation.

4. Dispositif selon la revendication 3, caractérisé en ce qu'il comporte une mémoire de tranche incluant la mémoire de macrobloc (5), et que l'ensemble des valeurs représentatives de la tranche en cours de formation est remplacé par l'ensemble des valeurs de la tranche correspondante de l'image (n) lorsqu'un signal d'erreur a été émis pendant sa formation.
